(19) Europäisches Patentamt
European Patent Office
Office européen des brevets

(11) **EP 4 303 650 B1**

(12) **EUROPEAN PATENT SPECIFICATION**

(45) Date of publication and mention
of the grant of the patent:
**12.11.2025 Bulletin 2025/46**

(21) Application number: **23183193.4**

(22) Date of filing: **04.07.2023**

(51) International Patent Classification (IPC):
**G02F 1/1335** (2006.01)    **G09F 19/12** (2006.01)

(52) Cooperative Patent Classification (CPC):
**G02F 1/133555; G02F 1/133504; G02F 1/133562;
G09F 19/12**

(54) **HIDDEN DISPLAY SYSTEM**

VERSTECKTES ANZEIGESYSTEM

SYSTÈME D'AFFICHAGE CACHÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.07.2022 US 202217859227**

(43) Date of publication of application:
**10.01.2024 Bulletin 2024/02**

(73) Proprietor: **Clarion Corporation of America
Auburn Hills, MI 48326 (US)**

(72) Inventors:
• **Hong, Young G.
Auburn Hills, MI 48326 (US)**
• **Melscoet, Isabelle
Auburn Hills, MI 48326 (US)**

(74) Representative: **Novagraaf Group
Chemin de l'Echo 3
1213 Onex / Geneva (CH)**

(56) References cited:
JP-A- 2006 021 574    US-A1- 2005 116 923
US-B1- 6 906 762

## Description

BACKGROUND

The present disclosure relates to display systems and configurations, and particularly to display systems and configurations that remain hidden while in an inactive state. More particularly, the present disclosure relates to hidden display systems that use a light-shaping diffuser. Hidden display systems according to the state of the art are disclosed in US 2005/116923 A1, US 6 906 762 B1 or JP 2006 021574 A, by way of example.

SUMMARY

According to the present disclosure, a hidden display system comprises a display, a light shaping diffuser, a display hiding layer, and a cover lens. The light shaping diffuser is located between the display and the display hiding layer.

In the same embodiment, a hidden display system comprises a display, a light shaping diffuser, a display hiding layer, and a light shaping diffuser. The display projects an image made up of pixels, and the light shaping diffuser reduces the number of pixels that are altered due to an optical interference effect between the image projected by the display and the display hiding layer.

In the same embodiment, a hidden display system comprises a display, a light shaping diffuser, a display hiding layer, and a cover lens, wherein a display is located beneath the light shaping diffuser, the light shaping diffuser is located beneath the display hiding layer, and in at least some illustrated embodiments, the display hiding layer is located beneath the cover lens.

According to some embodiments the light shaping diffuser is a holographic surface or a randomized micro lens array. According to some embodiments the display hiding layer comprises a perforated black layer and surface having physical indicia. The perforated black layer can comprise a plurality of spaced-apart apertures that have a generally uniform aperture size across the plane of the perforated black layer, and the plurality of apertures can be generally spaced apart from one another at a distance, with that generally uniform aperture size in one dimension being between about 0.025mm and about 0.1mm.

According to the invention, the display has both an active and an inactive mode. In an inactive mode, light reflected from the hidden display system projects an image of a surface, often having physical indicia. When the display is in an active mode, light reflected from the hidden display system projects an image of the surface, and further an image that is projected by the display.

According to some embodiments a light shaping diffuser reduces a Moire interference effect between the image projected by the display and the display hiding layer, and in at least some embodiments this diffuser has a FWHM angle of about 20 degrees or less.

Additional features of the present disclosure will become apparent to those skilled in the art upon consideration of illustrative embodiments exemplifying the best mode of carrying out the disclosure as presently perceived.

BRIEF DESCRIPTIONS OF THE DRAWINGS

The detailed description particularly refers to the accompanying figures in which:

FIG. 1A is a schematic diagram showing a comparative hidden display in an inactive mode;
FIG. 1B is a schematic diagram showing a comparative hidden display in an active mode;
FIG. 2A is a schematic diagram showing a hidden display system in an inactive mode according to at least one embodiment of the present disclosure;
FIG. 2B is a schematic diagram showing a hidden display system in an active mode according to at least one embodiment of the present disclosure;
FIG. 3 is a depiction of a mechanism for measuring the diffusion profile of a light emitter;
FIG. 4A is a chart profiling the diffusion profile of a comparative hidden display from a top-down view;
FIG. 4B is a chart profiling the angular luminous flux distribution of the diffusion profile of FIG. 4A;
FIG. 5A is a chart profiling the diffusion profile of a hidden display system having a holographic light shaping diffuser from a top-down view according to at least some embodiments of the present disclosure;
FIG. 5B is a chart profiling the angular luminous flux distribution of the emission profile of FIG. 5A;
FIG. 6A is a chart profiling the diffusion profile of a hidden display system having a randomized micro lens array light shaping diffuser from a top-down view according to at least some embodiments of the present disclosure;
FIG. 6B is a chart profiling the diffusion profile of a hidden display system from a top-down view according to at least some embodiments of the present disclosure;
FIG. 7A is a top-down view showing a hidden display system in an inactive mode according to at least some embodiments of the present disclosure;
FIG. 7B is a top-down view showing a hidden display system in an active mode according to at least some embodiments of the present disclosure;
FIG. 8A is a top-down view showing a comparative display in an active mode;
FIG. 8B is a top-down view showing a hidden display system in an active mode according to at least some embodiments of the present disclosure; and
FIG. 9 depicts a structure of a computer system for optimizing at least some embodiments of the present disclosure.

DETAILED DESCRIPTION

Certain exemplary embodiments will now be described to provide an overall understanding of the principles of the structure, function, manufacture, and use of the devices and methods disclosed herein. One or more examples of these embodiments are illustrated in the accompanying drawings. The features illustrated or described in connection with one exemplary embodiment may be combined with the features of other embodiments. Such modifications and variations are intended to be included within the scope of the present disclosure. Terms commonly known to those skilled in the art may be used interchangeably herein.

The present disclosure provides for systems that mitigate the scattering and interference effects of intermediate layers in hidden displays. These systems act to largely preserve, or otherwise improve, the viewing angle of a hidden display system. Viewers of the embodiments of the hidden display system can view projected images with greater clarity and intensity than those displays currently available in the art.

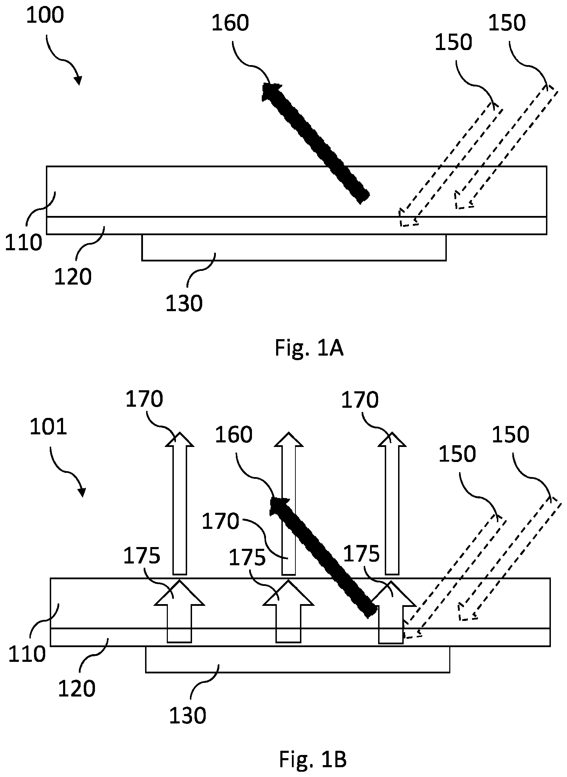

Turning first to FIG. 1A, a schematic diagram shows a comparative hidden display in an inactive mode 100, while FIG. 1B depicts the same comparative hidden display in an active mode 101. The comparative hidden displays 100 and 101 comprise cover lens 110, display hiding layer 120, and display 130. FIG. 1 further depicts ambient light 150, and reflected ambient light 160, which has been reflected from display hiding layer 120. In FIG. 1B, light emitted from the display 130 is depicted as broad arrows 175, while light ultimately emitted from the comparative hidden display in the active mode 101 is depicted using arrows 170. Arrows 175 and 170 indicate only a predominant direction of emitted light, and are not meant to directly represent a distribution of emitted photons.

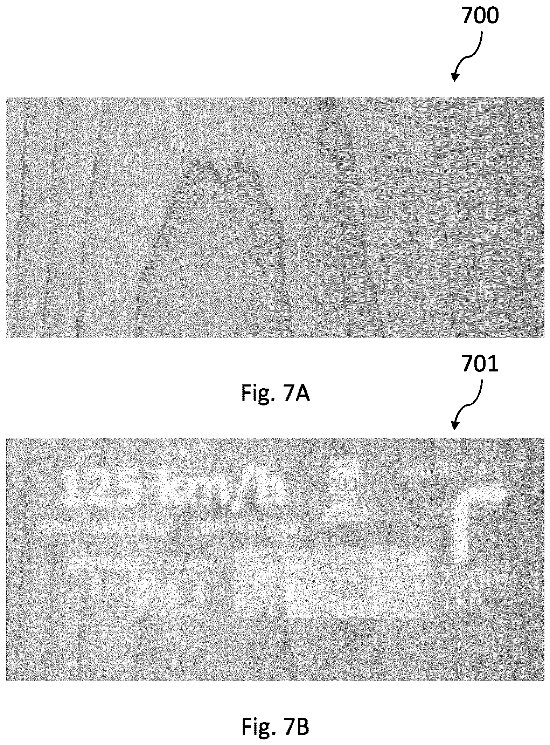

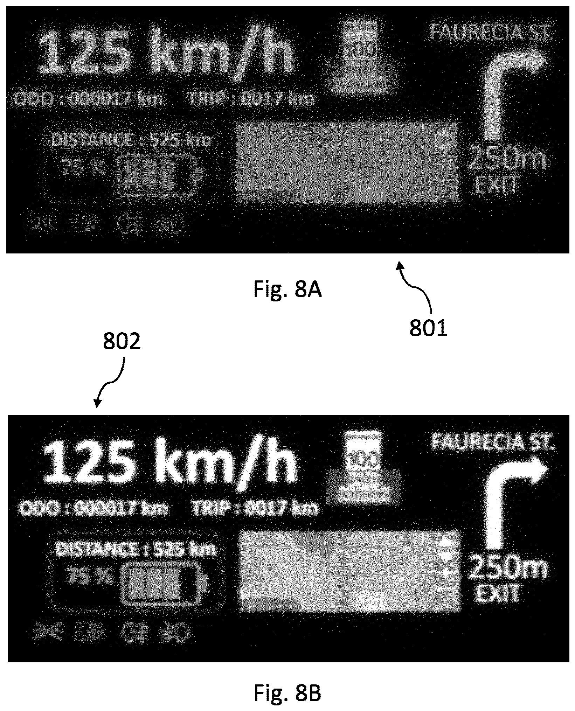

When the display 130 is in an inactive mode 100, no image is projected from display 130, and thus no image can be seen by an observer. Instead, the observer sees only the surface of a display hiding layer 120, reflecting ambient light 150. A display hiding layer may have indicia, and such a display hiding layer is depicted in FIG. 7A, depicting an observer's view of the comparative hidden display in an inactive mode 100. When the display 130 is on, rendering the comparative hidden display to an active mode 101, a display image is visible, such as display image 701 of FIG. 7B or display image 801 of FIG. 8A. To achieve this comparative hidden display functionality, the display hiding layer 120 is perforated with periodic perforations, where the display hiding layer 120 is constructed from material such to render it diffusive, translucent, or opaque. In some comparative display hiding layers 120, the layers are perforated, where the typical perforation holes are round and the hole size is between approximately about 0.025 mm to about 0.1 mm in diameter. In some comparative hidden displays, the density or periodicity of the perforation holes depends solely on a target transmission ratio of display hiding layer 120, which is typically between about 20% to about 40%. In a comparative hidden display, the target transmission ratio of display hiding layer 120 depends only on the emissions profile of display 130, with the goal of rendering light emitted to the observer 170 from the display 130 according to a target emitted photon distribution.

Because of the periodic perforations regularly arranged in display hiding layer 120, and a mismatch between this pattern of perforations and a pattern of pixels in display 130, an observer will see a Moire pattern. This Moire effect significantly degrades the quality of the observed image.

In a comparative hidden display system, this Moire pattern can be addressed adding a coating having diffusive properties to the surface of display hiding layer 120, or in some embodiments utilizing a separate diffusive surface. In these embodiments of a comparative hidden display system, a user will observe a degradation of image sharpness and brightness.

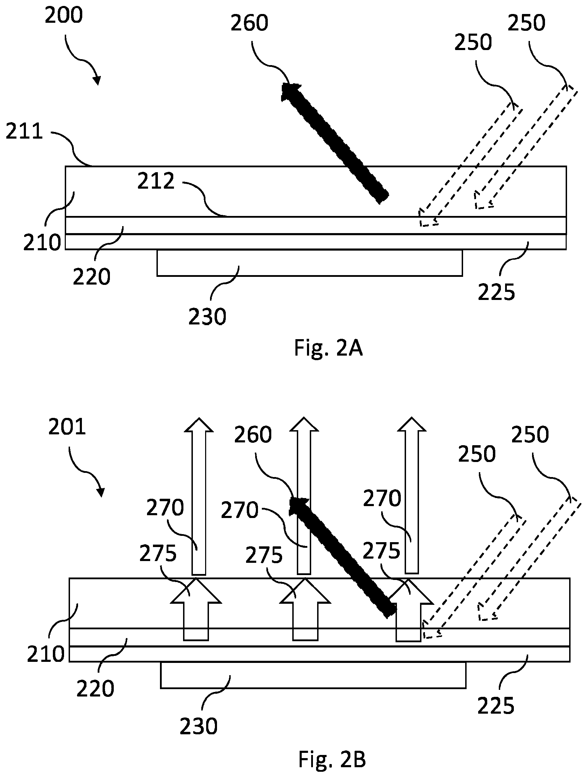

In contrast to FIGSs. 1, FIGs. 2 depict a hidden display system of at least one embodiment in an inactive mode 200 in FIG. 2A and in an active mode 201 in FIG. 2B. The hidden display system of FIGs. 2 comprises a cover lens 210 having upper surface 211 and lower surface 212, display hiding layer 220, light shaping diffuser 225, and display 230. FIGs. 2 further depict ambient light 250, and reflected ambient light 260, which has been reflected from display hiding layer 220. In FIG. 2B, light emitted from the display 230 is depicted as broad arrows 275, while light ultimately emitted from the hidden display system in the active mode 201 is depicted using arrows 270. Arrows 275 and 270 indicate only a predominant direction of emitted light, and are not meant to directly represent a distribution of emitted photons.

In a hidden display system such as that depicted in FIGs. 2, the Moire effect described above is either removed entirely or significantly reduced with minimal reduction in the sharpness and brightness of an image perceived by an observer when hidden display system 201 is in an active mode. According to at least some embodiments, this reduction can be measured according to the number and intensity of pixels altered by a Moire effect.

According to at least some embodiments of the present disclosure, a light shaping diffuser 225 is positioned between the display 230 and the display hiding layer 220. According to at least some embodiments, the light shaping diffuser 225 is a holographic layer. According to other embodiments, the light shaping diffuser 225 is a randomized micro lens array. According to yet other embodiments, the light shaping diffuser 225 is a combination of both a holographic layer and a micro lens array.

According to at least some embodiments, the light shaping diffuser 225 has a light diffusing profile that resembles an ideal Gaussian distribution. In other embodiments, the light shaping diffuser 225 has a diffusing profile that is limited within a field of view angle. In at least some of such embodiments, this results in a decreased hazing effect and better transmission ratio comparing to a comparative diffuser surface.

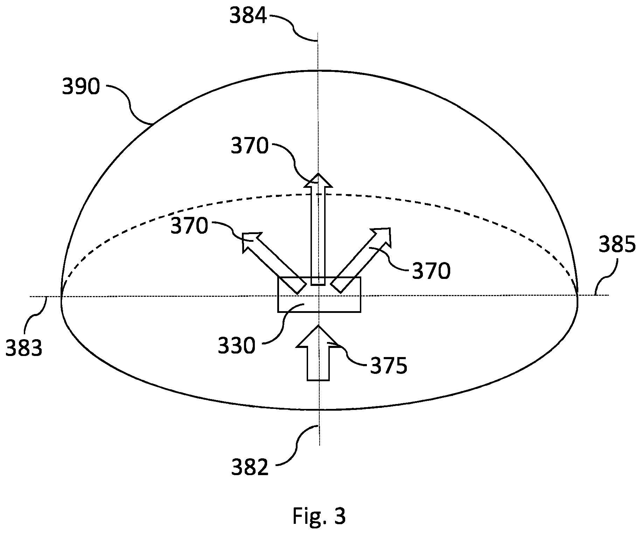

Turning to a discussion of diffusion profiles of a light shaping diffuser, FIG. 3 depicts a mechanism for measuring the diffusion profile of a light source. In the depiction of FIG. 3, the light source is a combination of incident light (which in this example is collimated) and a light shaping diffuser 330, such that diffused light 370 is ultimately measured in intensity by a semi-sphere light intensity sensor 390. In the depiction of FIG. 3, diffused light 370 strikes semi-sphere light intensity sensor 390. The intensity of this diffused light as measured by the semi-sphere light intensity sensor 390 can then be plotted graphically, such as on a negative Y axis 382, positive Y axis 384, negative X axis 383, and positive X axis 385.

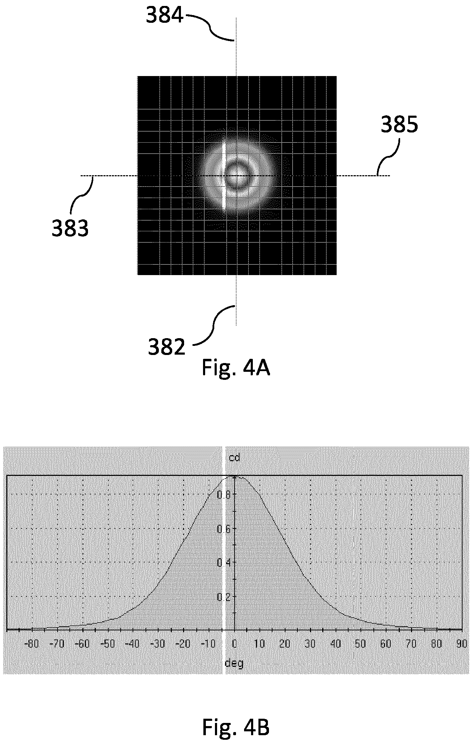

FIG. 4A is a chart depicting the diffusion profile of a comparative hidden display, across the same axis configuration of FIG. 3. FIG. 4B similarly depicts a chart profiling the angular luminous flux distribution of the diffusion profile of FIG. 4A, wherein the distribution of FIG. 4A is profiled along one axis. In this instance, the Full Width at Half Maximum (FWHM) of the plot of FIG. 4B is significantly greater than a 20 degree angle. The comparative diffuser, which is a surface or coating of a display hiding layer such as display hiding layer 120 of FIGs. 1 is made by surface roughness induced by surface grinding, chemical etching, or laser etching. Scattering particles inside the comparative diffuser can contribute to the diffusing properties.

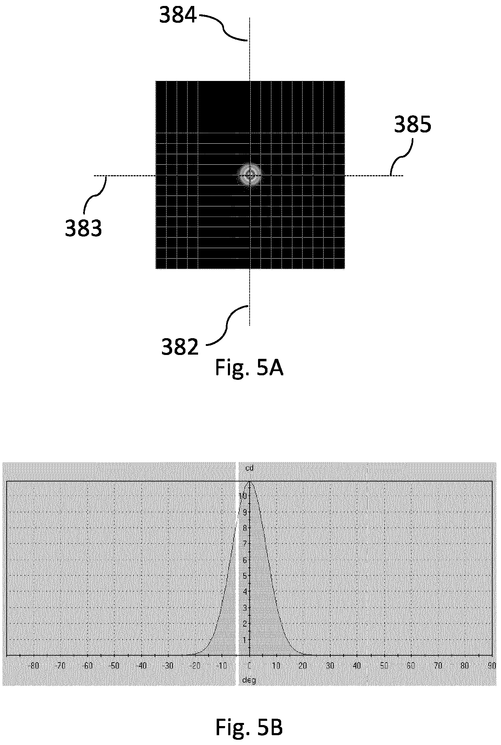

An advantageous embodiment of a hidden display system is depicted in FIG. 5A showing a chart depicting the diffusion profile of a hidden display system, across the same axis configuration of FIG. 3. FIG. 5B similarly depicts a chart profiling the angular luminous flux distribution of the diffusion profile of FIG. 5A, wherein the distribution of FIG. 5A is profiled along one axis. In this instance, the FWHM of the plot of FIG. 5B is less than a 20 degree angle. In the charts of FIG. 5, the hidden display system comprises a holographic light shaping diffuser, such as diffuser 225 of FIGs. 2.

According to at least some embodiments, a holographic light shaping diffuser is designed and made by computer generated hologram creation procedure. The typical beam shaping profile of a holographic diffuser according to at least some embodiments of the present disclosure resembles an ideal Gaussian profile. In some embodiments, a Lambertian diffuser is applied in the form of a diffusive film. In other embodiments wherein the diffuser is closer to an ideal Gaussian profile, the Gaussian diffuser can take the form of a ground glass, etched plate, or film form.

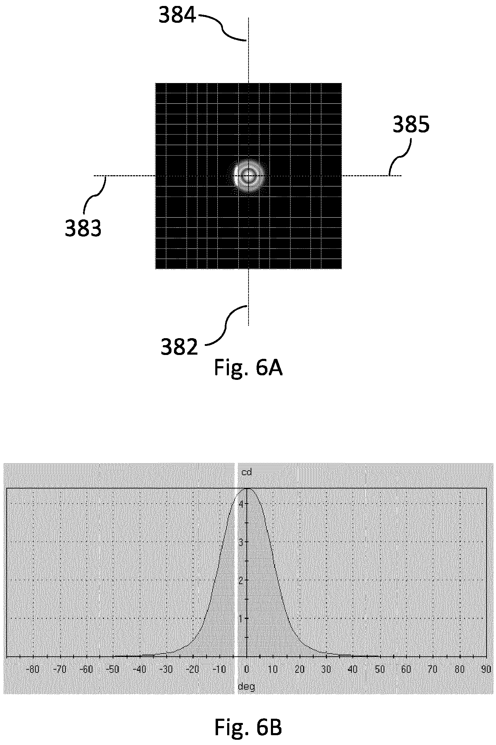

An advantageous embodiment of a hidden display system is depicted in FIG. 6A showing a chart depicting the diffusion profile of a hidden display system, across the same axis configuration of FIG. 3. FIG. 6B similarly depicts a chart profiling the angular luminous flux distribution of the diffusion profile of FIG. 6A, wherein the distribution of FIG. 6A is profiled along one axis. In this instance, the FWHM of the plot of FIG. 6B is less than a 20 degree angle. In the charts of FIG. 6, the hidden display system comprises a micro lens array light shaping diffuser, such as diffuser 225 of FIGs. 2.

According to at least some embodiments, the field of view of a display is expressed as the absolute value of the endpoints of a range of degrees from a horizontal projection normal to a display. In other or the same embodiments, the properties of a diffuser are defined, at least in part, by the FWHM angle of the diffuser. In such embodiments, a composite field of view for the hidden display system can be defined as the square root of the sum of the squares of the FWHM angle and the field of view of the display. In an example embodiment, wherein the display has a field of view that is +/- 50 degree in horizontal, and the diffuser has a FWHM angle of +/- 20 degrees, the composite field of view of the display image is $\beta = \sqrt{20^2 + 50^2} = +/- 53.85$ [degree] in horizontal. When discussing such embodiments, descriptions of the light shaping diffuser FWHM are based on an assumed collimated light incident angle of 0 degrees.

According to at least some embodiment, a light shaping diffuser in a display system covers a display emitting the light with a +/- 50 degree in horizontal field of view, and a +/- 20 degree in vertical field of view. In some embodiments the display has a luminance level, defined as 25% of the max luminance at perpendicular viewing angle, which is configured for use in automotive displays. In such automotive display embodiments, the field of view of the hidden display system, using a Gaussian light shaping diffuser with 20 degree FWHM diffuser property, is +/- 53.85 degree in horizontal, and +/- 28.25 degree in vertical.

According to at least some embodiments, a relationship between a light divergent angle of a hidden display system $\beta$, a light shaping diffuser FWHM angle $\Delta$, and an incoming light FWHM angle $\alpha$, is given by $\beta = \sqrt{\alpha^2 + \Delta^2}$. In such embodiments, the light shaping diffuser FWHM angle $\Delta$ is defined as the FWHM angle of diffusion of a collimated light beam after passing through the light shaping diffuser.

According to at least some embodiments, a randomized micro lens array diffuser is designed by a computer generated micro lens array pattern creation procedure. According to at least some embodiments, a beam shaping profile of a randomized micro lens array is between a Gaussian profile and top-hat profile, though in other embodiments this profile resembles an ideal Gaussian or an ideal top-hat profile.

According to at least some embodiments, a cover lens can be crafted from materials including glass such as soda lime and aluminosilicate, plastics or polymers, textiles, or organic materials such as wood. In some embodiments wherein the cover lens comprises indicia, substrates such as glass and plastic can be decorated using different techniques, such as screen-printing, digital printing, holographics, or decorated film either obtained through IML or laminated on a lower surface of the cover lens. In at least some of such embodiments, the lower surface can be textured, or serve as a basis for additional functional layers such as AG, AR, AF, and AM layers. According to other embodiments, lamination of such decorated film can also occur on an upper surface of the cover lens substrate. Decorated cover lenses bearing indicia for hidden display systems can have standard optical layers as well as surface texturing on the upper surface of the cover lens.

According to at least some embodiments, the cover lens can have a transmission between about 20% and about 40%, and a diffusion beneath about 50%, though in some embodiments the diffusion is beneath about 4%. According to at least some embodiments, the upper surface of the cover lens has a reflection beneath about 2.5%. According to some embodiments, and in particular those which have been manufactured using magnetron sputtering techniques, the upper surface of the cover lens has a reflection between about 0.1% and about 0.5%.

In at least some embodiments the cover lens has a gloss unit beneath 70, and in other or the same embodiments a matte finish is used. In at least some embodiments a cover lens has a white black homogeneity drop below about 10%, and minimizes color shift. According to at least some embodiments of a hidden display system as described herein, a LCD display is covered with a diffusive layer, which is further covered by a decorated layer, which is further covered by a glass or plastic base substrate, which is further covered by multiple layers of coatings, including AG, AR, and ETC coatings.

FIG. 7 depicts an image of a display hiding layer 700 when a hidden display system is in an inactive mode. In this mode, wherein the display hiding layer 700 comprises physical indicia resembling a wood-grain look, the display hiding layer 700 has regularly-arranged perforations which are not visible to an observer from a typical distance of observation. According to at least some embodiments, a display hiding layer comprises a perforated layer. In at least some of such embodiments, that perforated layer is a shade of grey or black. In at least some embodiments, the perforated layer is formed to include a plurality of spaced-apart apertures having a generally uniform aperture size across the plane of the perforated layer. According to at least some of such embodiments, the plurality of apertures are generally spaced apart from one another at a uniform distance. According to at least some further embodiments, the generally uniform aperture size is, in one dimension, between about 0.025 mm and about 0.1 mm. According to at least some embodiments, these apertures are circular, ovular, or constructed from N-sided polygons, where N is selected from a group of whole numbers.

According to at least some embodiments, a transmission ratio of a light shaping diffuser is between about 80% and about 90% over the visible light spectrum between about 400nm and about 800 nm.

According to at least some embodiments, the computer generation of a micro lens array pattern or holographic diffuser pattern can be implemented on a computer readable medium can include a central processing unit (CPU), memory, and/or support circuits (or I/O), among other features. In embodiments having a memory, that memory can be connected to the CPU, and may be one or more of a readily available memory, such as a read-only memory (ROM), a random access memory (RAM), floppy disk, hard disk, cloud-based storage, or any other form of digital storage, local or remote. Software instructions, algorithms, and data can be coded and stored within the memory for instructing the CPU. Support circuits can also be connected to the CPU for supporting the processor in a suitable manner. The support circuits may include cache, power supplies, clock circuits, input/output circuitry, and/or subsystems, and the like. These tasks can be further optimized by leveraging a graphics processing unit (GPU).

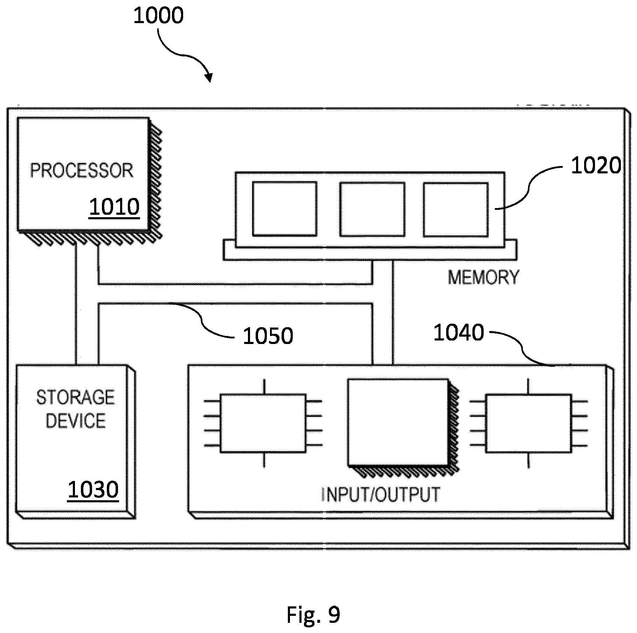

FIG. 9 provides for one non-limiting example of a computer system 1000 for performing actions provided for in the present disclosure, including but not limited to the computer generation of a micro lens array pattern or holographic diffuser pattern. The system 1000 can include a processor 1010, a memory 1020, a storage device 1030, and an input/output device 1040. Each of the components 1010, 1020, 1030, and 1040 can be interconnected, for example, using a system bus 1050. The processor 1010 can be capable of processing instructions for execution within the system 1000. The processor 1010 can be a single-threaded processor, a multi-threaded processor, or similar device. The processor 1010 can be capable of processing instructions stored in the memory 1020 or on the storage device 1030.

The memory 1020 can store information within the system 1000. In some implementations, the memory 1020 can be a computer-readable medium. The memory 1020 can, for example, be a volatile memory unit or a nonvolatile memory unit. In some implementations, the memory 1020 can store information related to the instructions for manufacturing light diffusing layers, among other information.

The storage device 1030 can be capable of providing mass storage for the system 1000. In some implementations, the storage device 1030 can be a non-transitory computer-readable medium. The storage device 1030 can include, for example, a hard disk device, an optical disk device, a solid-date drive, a flash drive, magnetic tape, or some other large capacity storage device. The storage device 1030 may alternatively be a cloud storage device, *e.g.,* a logical storage device including multiple physical storage devices distributed on a network and accessed using a network. In some implementations, the information stored on the memory 1020 can also or instead be stored on the storage device 1030.

The input/output device 1040 can provide input/output operations for the system 1000. In some implementations, the input/output device 1040 can include one or more of network interface devices (*e.g.*, an Ethernet card), a serial communication device (*e.g.,* an RS-232 10 port), and/or a wireless interface device (*e.g.,* a short-range wireless communication device, an 802.11 card, a 3G wireless modem, a 4G wireless modem, or a 5G wireless modem). In some implementations, the input/output device 1040 can include driver devices configured to receive input data and send output data to other input/output devices, *e.g.,* a keyboard, a printer, and display devices. In some implementations, mobile computing devices, mobile communication devices, and other devices can be used.

In some implementations, the system 1000 can be a microcontroller. A microcontroller is a device that contains multiple elements of a computer system in a single electronics package. For example, the single electronics package could contain the processor 1010, the memory 1020, the storage device 1030, and input/output devices 1040. The present disclosure also accounts for providing a non-transient computer readable medium capable of storing instructions.

Display systems generally operate by directing photons in the direction of a viewer, such that the viewer's eyes receive an image. In most modern display systems, the meets and bounds of those images are described as projected pixels, where those pixels operate as evenly-distributed, homogenous, tessellated projectors capable of projecting both colors (or shades in the event of black and white displays) and intensities. In most modern displays, these pixels operate as squares, and these squares are tessellated into grids. By adjusting the color and intensity of each pixel, an operator of the display can change the image projected by the display. Common arrays of pixels to form images in present-day displays include 720p (1280 x 720 pixels), 1080p (1920 x 1080 pixels), 1440p or "2k" (2560 x 1440 pixels), and 2160p or "4k" (3840 x 2160 pixels).

In many theoretical exercises, a display system is treated as homogeneous (the same emission intensity in all locations) and isotropic (the same intensity in all directions). In practice, this is untrue, resulting in many commercial displays such as televisions having classifications of "viewing angle", denoting an angular range relative to the normal of the display plane from which a typical observer would still experience a relatively ideal picture quality. In such displays, photons emitted by the display are meant to approach an isotropic norm, such that each pixel emits as uniformly in all directions forward of the display as possible. Angles outside of the ideal viewing angle, where observers view blurred images, with lower intensity and contrast, which are more susceptible to interference patterns, are referred to as "off-angles".

In some embodiments of comparative displays, these systems are designed to be hidden until such time as they are activated. Examples of hidden displays include those which are contained within mirrors, surfaces of tables, and other objects such that an observer would not be able to acknowledge the display immediately upon looking at the object. While an observer may be able to distinguish a section of the mirror, table, or other object, that appears to have a separate surface texture where the display is located, the display would not present itself to the observer as a standard screen. Due to the nature of hidden displays, which have an intermediate layer between the display and the observer that scatters photons emitted by the display, observers often experience effects when viewing hidden displays from all angles as though they are viewing an uncovered display from outside the ideal viewing angle.

Accordingly, the present disclosure provides for a hidden display that minimizes or counteracts the scattering and interference effects of intermediate layers in hidden displays such that viewers relatively normal to those displays can view projected images with greater clarity and intensity than comparative displays.

**Claims**

1.  A hidden display system comprising:

    a display (230);
    a display hiding layer (220);
    a cover lens (210);
    wherein the display (230) has an active mode (201) and an inactive mode (200), **characterized in that** the hidden display system further comprises a light shaping diffuser (225), the light shaping diffuser (225) being located between the display (230) and the display hiding layer (220), and the light shaping diffuser (225) being configured to reduce the number of pixels of an image projected by the display (230) that are altered due to an optical interference effect between the image projected by the display (230) and the display hiding layer (220); and **in that** the display hiding layer (220) comprises a surface having physical indicia,
    whereby, when the display (230) is in the inactive mode (200), light reflected from the hidden display system projects an image of the surface of the display hiding layer (220) having said physical indicia;
    and whereby, when the display (230) is in the active mode (201), light reflected from the hidden display system projects an image of the surface of the display hiding layer (220) having said physical indicia, and an image projected by the display (230).

**2.** The hidden display system of claim 1, wherein the light shaping diffuser (225) is a holographic diffuser and/or a micro lens array diffuser and/or a generally Lambertian diffuser and/or a generally Gaussian diffuser.

**3.** The hidden display system of claim 2, wherein the micro lens array diffuser is randomized.

**4.** The hidden display system according to at least one of the preceding claims, wherein the display hiding layer (220) comprises a perforated layer.

**5.** The hidden display system of claim 4, wherein the display hiding layer (220) comprises a perforated black layer, the perforated black layer having a plurality of evenly spaced holes.

**6.** The hidden display system of claim 5, wherein the perforated black layer is formed to include a plurality of spaced-apart apertures having a generally uniform aperture size across the plane of the perforated black layer, the plurality of apertures being generally spaced apart from one another a distance, the generally uniform aperture size in one dimension being between about 0.025 mm and about 0.1 mm.

**7.** The hidden display system according to at least one of the preceding claims, wherein the display hiding layer (220) is located beneath the cover lens (210).

**8.** The hidden display system according to at least one of the preceding claims, wherein the optical interference effect is a Moire effect.

**9.** The hidden display system according to at least one of the preceding claims, wherein the light shaping diffuser (225) has a diffuser FWHM angle of 20 degrees or less.

**10.** The hidden display system of claim 1, wherein the display hiding layer (220) is located beneath the cover lens (210);

wherein the light shaping diffuser (225) is selected from the group consisting of a holographic surface and a randomized micro lens array; wherein the display hiding layer (220) comprises a perforated black layer and a surface having physical indicia, wherein the perforated black layer comprising a plurality of spaced-apart apertures having a generally uniform aperture size across the plane of the perforated black layer, the plurality of apertures being generally spaced apart from one another a distance, the generally uniform aperture size in one dimension being between about 0.025 mm and about 0.1 mm;

wherein the display (230) has an active mode (201) and an inactive mode (200);
wherein, when the display (230) is in an inactive mode (200), light reflected from the hidden display system projects an image of the surface having physical indicia;
wherein, when the display (230) is in an active mode (200), light reflected from the hidden display system projects an image of the surface having physical indicia, and an image projected by the display (230);
wherein the light shaping diffuser (225) reduces a Moire interference effect between the image projected by the display (230) and the display hiding layer (220; and
wherein the light shaping diffuser (225) has a diffuser FWHM angle of 20 degrees or less.

**Patentansprüche**

**1.** System für verborgene Anzeige, umfassend:

eine Anzeige (230);
eine Anzeigeverbergungsschicht (220);
eine Abdecklinse (210);
wobei die Anzeige (230) einen aktiven Modus (201) und einen inaktiven Modus (200) aufweist, **dadurch gekennzeichnet, dass** das System für verborgene Anzeige ferner einen lichtformenden Strahler (225) umfasst, wobei sich der lichtformende Strahler (225) zwischen der Anzeige (230) und der Anzeigeverbergungsschicht (220) befindet und der lichtformende Strahler (225) konfiguriert ist, um die Anzahl von Pixeln eines Bildes, das durch die Anzeige (230) projiziert wird, zu verringern, die aufgrund eines optischen Interferenzeffekts zwischen dem Bild, das durch die Anzeige (230) projiziert wird, und der Anzeigeverbergungsschicht (220) verändert werden; und **dass** die Anzeigeverbergungsschicht (220) eine Oberfläche, die physikalische Zeichen aufweist, umfasst,
wobei, wenn die Anzeige (230) in dem inaktiven Modus (200) ist, Licht, das von dem System für verborgene Anzeige reflektiert wird, ein Bild der Oberfläche der Anzeigeverbergungsschicht (220), die die physikalischen Zeichen aufweist, projiziert;
wobei, wenn die Anzeige (230) in dem aktiven Modus (201) ist, Licht, das von dem System für verborgene Anzeige reflektiert wird, ein Bild der Oberfläche der Anzeigeverbergungsschicht (220), die die physikalischen Zeichen aufweist, und ein Bild, das durch die Anzeige (230) projiziert wird, projiziert.

**2.** System für verborgene Anzeige nach Anspruch 1, wobei der lichtformende Strahler (225) ein holografischer Strahler und/oder ein Mikrolinsenarray-Strahler und/oder ein allgemein Lambertscher Strahler und/oder ein allgemein Gaußscher Strahler ist.

3. System für verborgene Anzeige nach Anspruch 2, wobei der Mikrolinsenarray-Strahler randomisiert ist.

4. System für verborgene Anzeige nach mindestens einem der vorstehenden Ansprüche, wobei die Anzeigeverbergungsschicht (220) eine perforierte Schicht umfasst.

5. System für verborgene Anzeige nach Anspruch 4, wobei die Anzeigeverbergungsschicht (220) eine perforierte schwarze Schicht umfasst, wobei die perforierte schwarze Schicht eine Vielzahl von gleichmäßig beabstandeten Löchern aufweist.

6. System für verborgene Anzeige nach Anspruch 5, wobei die perforierte schwarze Schicht ausgebildet ist, um eine Vielzahl von beabstandeten Öffnungen, die eine allgemein einheitliche Öffnungsgröße über die Ebene der perforierten schwarzen Schicht hinweg aufweisen, einzuschließen, wobei die Vielzahl von Öffnungen allgemein eine Distanz voneinander beabstandet sind, wobei die allgemein einheitliche Öffnungsgröße in einer Dimension zwischen etwa 0,025 mm und etwa 0,1 mm liegt.

7. System für verborgene Anzeige nach mindestens einem der vorstehenden Ansprüche, wobei sich die Anzeigeverbergungsschicht (220) unter der Abdecklinse (210) befindet.

8. System für verborgene Anzeige nach mindestens einem der vorstehenden Ansprüche, wobei der optische Interferenzeffekt ein Moiré-Effekt ist.

9. System für verborgene Anzeige nach mindestens einem der vorstehenden Ansprüche, wobei der lichtformende Strahler (225) einen Strahler-FWHM-Winkel von 20 Grad oder weniger aufweist.

10. System für verborgene Anzeige nach Anspruch 1, wobei sich die Anzeigeverbergungsschicht (220) unter der Abdecklinse (210) befindet;

wobei der lichtformende Strahler (225) aus der Gruppe ausgewählt ist, bestehend aus einer holografischen Oberfläche und einem randomisierten Mikrolinsenarray;
wobei Anzeigeverbergungsschicht (220) eine perforierte schwarze Schicht und eine Oberfläche, die physikalische Zeichen aufweist, umfasst, wobei die perforierte schwarze Schicht eine Vielzahl von beabstandeten Öffnungen, die eine allgemein einheitliche Öffnungsgröße über die Ebene der perforierten schwarzen Schicht hinweg aufweisen, umfasst, wobei die Vielzahl von Öffnungen allgemein eine Distanz voneinander beabstandet sind, wobei die allgemein einheitliche Öffnungsgröße in einer Dimension zwischen etwa 0,025 mm und etwa 0,1 mm liegt;
wobei die Anzeige (230) einen aktiven Modus (201) und einen inaktiven Modus (200) aufweist;
wobei, wenn die Anzeige (230) in einem inaktiven Modus (200) ist, Licht, das von dem System für verborgene Anzeige reflektiert wird, ein Bild der Oberfläche, die physikalische Zeichen aufweist, projiziert;
wobei, wenn die Anzeige (230) in einem aktiven Modus (200) ist, Licht, das von dem System für verborgene Anzeige reflektiert wird, ein Bild der Oberfläche, die physikalische Zeichen aufweist, und ein Bild, das durch die Anzeige (230) projiziert wird, projiziert;
wobei der lichtformende Strahler (225) einen Moiré-Interferenzeffekt zwischen dem Bild, das durch die Anzeige (230) projiziert wird, und der Anzeigeverbergungsschicht (220) verringert; und
wobei der lichtformende Strahler (225) einen Strahler-FWHM-Winkel von 20 Grad oder weniger aufweist.

**Revendications**

1. Système d'affichage caché comprenant :

un dispositif d'affichage (230) ;
une couche de dissimulation de dispositif d'affichage (220) ;
une lentille de couverture (210) ;
dans lequel le dispositif d'affichage (230) a un mode actif (201) et un mode inactif (200), **caractérisé en ce que** le système d'affichage caché comprend en outre un diffuseur holographique (225), le diffuseur holographique (225) étant situé entre le dispositif d'affichage (230) et la couche de dissimulation de dispositif d'affichage (220), et le diffuseur holographique (225) étant configuré pour réduire le nombre de pixels d'une image projetée par le dispositif d'affichage (230) qui sont altérés en raison d'un effet d'interférence optique entre l'image projetée par le dispositif d'affichage (230) et la couche de dissimulation de dispositif d'affichage (220) ; et **en ce que** la couche de dissimulation de dispositif d'affichage (220) comprend une surface ayant des indications physiques,
moyennant quoi, lorsque le dispositif d'affichage (230) est en mode inactif (200), la lumière réfléchie par le système d'affichage caché projette une image de la surface de la couche de dissimulation de dispositif d'affichage (220) ayant lesdites indications physiques ;

et moyennant quoi, lorsque le dispositif d'affichage (230) est en mode actif (201), la lumière réfléchie par le système d'affichage caché projette une image de la surface de la couche de dissimulation de dispositif d'affichage (220) ayant lesdites indications physiques, et une image projetée par le dispositif d'affichage (230).

2. Système d'affichage caché selon la revendication 1, dans lequel le diffuseur holographique (225) est un diffuseur holographique et/ou un diffuseur à réseau de micro lentilles et/ou un diffuseur généralement lambertien et/ou un diffuseur généralement gaussien.

3. Système d'affichage caché selon la revendication 2, dans lequel le diffuseur à réseau de micro lentilles est aléatoire.

4. Système d'affichage caché selon au moins l'une des revendications précédentes, dans lequel la couche de dissimulation de dispositif d'affichage (220) comprend une couche perforée.

5. Système d'affichage caché selon la revendication 4, dans lequel la couche de dissimulation de dispositif d'affichage (220) comprend une couche noire perforée, la couche noire perforée ayant une pluralité de trous régulièrement espacés.

6. Système d'affichage caché selon la revendication 5, dans lequel la couche noire perforée est formée pour inclure une pluralité d'ouvertures espacées ayant une taille d'ouverture généralement uniforme sur le plan de la couche noire perforée, la pluralité d'ouvertures étant généralement espacées les unes des autres d'une distance, la taille d'ouverture généralement uniforme dans une dimension étant comprise entre environ 0,025 mm et environ 0,1 mm.

7. Système d'affichage caché selon au moins l'une des revendications précédentes, dans lequel la couche de dissimulation de dispositif d'affichage (220) est située sous la lentille de couverture (210).

8. Système d'affichage caché selon au moins l'une des revendications précédentes, dans lequel l'effet d'interférence optique est un effet moiré.

9. Système d'affichage caché selon au moins l'une des revendications précédentes, dans lequel le diffuseur holographique (225) a un angle FWHM de diffuseur de 20 degrés ou moins.

10. Système d'affichage caché selon la revendication 1, dans lequel la couche de dissimulation de dispositif d'affichage (220) est située sous la lentille de couverture (210) ;

dans lequel le diffuseur holographique (225) est choisi dans le groupe constitué d'une surface holographique et d'un réseau de micro-lentilles aléatoires ;

dans lequel la couche de dissimulation de dispositif d'affichage (220) comprend une couche noire perforée et une surface ayant des indications physiques, dans lequel la couche noire perforée comprend une pluralité d'ouvertures espacées ayant une taille d'ouverture généralement uniforme dans le plan de la couche noire perforée, la pluralité d'ouvertures étant généralement espacées les unes des autres d'une certaine distance, la taille d'ouverture généralement uniforme dans une dimension étant comprise entre environ 0,025 mm et environ 0,1 mm ;

dans lequel le dispositif d'affichage (230) a un mode actif (201) et un mode inactif (200) ;

dans lequel, lorsque le dispositif d'affichage (230) est en mode inactif (200), la lumière réfléchie par le système d'affichage caché projette une image de la surface ayant des indications physiques ;

dans lequel, lorsque le dispositif d'affichage (230) est en mode actif (200), la lumière réfléchie par le système d'affichage caché projette une image de la surface ayant des indications physiques et une image projetée par le dispositif d'affichage (230) ;

dans lequel le diffuseur holographique (225) réduit un effet d'interférence moiré entre l'image projetée par le dispositif d'affichage (230) et la couche de dissimulation de dispositif d'affichage (220) ; et

dans lequel le diffuseur holographique (225) a un angle FWHM de diffuseur de 20 degrés ou moins.

Fig. 1A

Fig. 1B

200

260

250

250

211

212

210

220

225

230

Fig. 2A

201

260

250

250

270

270

270

275

275

275

210

220

225

230

Fig. 2B

Fig. 3

Fig. 4A

Fig. 4B

Fig. 5A

Fig. 5B

384
385
383
382

Fig. 6A

Fig. 6B

700

Fig. 7A

701

Fig. 7B

Fig. 8A

801

802

Fig. 8B

1000

PROCESSOR
1010

1020

MEMORY

1050

1040

STORAGE
DEVICE
1030

INPUT/OUTPUT

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005116923 A1
- US 6906762 B1

- JP 2006021574 A